# EUROPEAN PATENT APPLICATION

(11) **EP 4 382 338 A1**
(43) Date of publication of application: **12.06.2024**
(21) Application number: 21952584.7
(22) Date of filing: 26.11.2021
(51) Int. Cl.: B60L 3/00, B60L 50/71, B60L 58/40, B60L 58/31

(54) **HYBRID POWER SYSTEM WITH MULTIPLE FUEL CELLS, AND ENERGY MANAGEMENT METHOD AND APPARATUS THEREFOR**

(30) Priority: 05.08.2021 CN 202110896901
(71) Applicant: CRRC TANGSHAN CO., LTD., Fengrun District Tangshan Hebei 063035 (CN)
(72) Inventor: HAN, Guopeng, Tangshan, Hebei 063035 (CN); PEI, Chunxing, Tangshan, Hebei 063035 (CN); FENG, Xuan, Tangshan, Hebei 063035 (CN); WANG, Yanqin, Tangshan, Hebei 063035 (CN); WANG, Xinghua, Tangshan, Hebei 063035 (CN); LIU, Nan, Tangshan, Hebei 063035 (CN); ZHAO, Lili, Tangshan, Hebei 063035 (CN)
(74) Representative: Michalski Hüttermann & Partner Patentanwälte mbB
(86) International application number: PCT/CN2021/133405
(87) International publication number: WO 2023/010721

(57) **Abstract**

A hybrid power system having multiple fuel cells, and an energy management method and apparatus therefor, the hybrid power system comprising: a power cell, which is connected to a DC bus; and a fuel cell system, which comprises at least two parallel branches, wherein at least two fuel cells are connected in series in each branch, each branch is connected to the DC bus by means of a DC/DC module, bypass isolation switches are connected in parallel at two ends of each fuel cell, and the bypass isolation switches are used to connect the fuel cells to the fuel cell system for power supply or to remove the fuel cells from the fuel cell system.

## Description

### TECHNICAL FIELD

The present disclosure relates to the field of battery energy management, and more particularly, to a hybrid power system with multiple fuel cells, an energy management method, and an energy management device therefor.

### BACKGROUND

The power system of the rail vehicle often employs an electric-electric hybrid power system that comprises the fuel cell or the power battery. Compared to the automobile, the hybrid power system of the rail vehicle requires higher power and generally employs the customized high-power fuel cell system, which is costly and has low technological maturity. Although a small-power fuel cell has higher technological maturity and stronger selectivity, it cannot be directly applied in rail vehicles due to the low power of every single one.

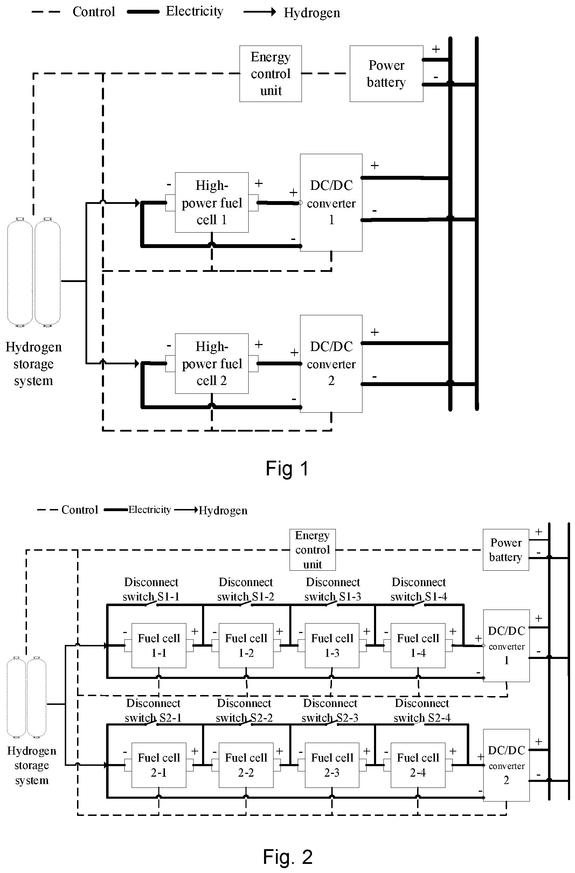

The conventional hybrid power system of the rail vehicle primarily mainly employs high-power fuel cells simply paralleled for the power supply, as shown in Fig. 1. In this solution, each high-power fuel cell is connected to the DC bus (Direct Current bus) via a DC/DC converter, and the power battery is directly connected to the DC bus. The power supply solution of the hybrid power system with high-power fuel cells simply paralleled, due to the high power demand of each single fuel cell, generally requires customized development with high cost. And, affected by the operating characteristics of the fuel cell, when the vehicle's power demand is low, the efficiency of the high-power fuel cell is at a low point, which is not conducive to improving the efficiency of the hybrid power system. Due to the small number of fuel cells in the hybrid power system, if two fuel cells fail, the hybrid power system loses the energy source and cannot continue to operate.

### SUMMARY

The embodiment of the present disclosure provides a hybrid power system with multiple fuel cells, an energy management method, and a device therefor, to solve the above technical problems.

In the first aspect, the embodiment of the present disclosure provides a hybrid power system with multiple fuel cells, comprising:
a power battery, connected to a DC bus; and
a fuel cell system, comprising at least two paralleled branches, each branch having at least two fuel cells connected in series, each branch is connected to the DC bus via a DC/DC converter, and two ends of each fuel cell connected in parallel with a bypass disconnect switch to connect the fuel cell into the fuel cell system for power supply or disconnect the fuel cell from the fuel cell system.

In the second aspect, the embodiment of the present disclosure provides an energy management method for the hybrid power system with multiple fuel cells, adapted to the hybrid power system described in the first aspect, comprising:
obtaining a current main state value of the hybrid power system, wherein the main state value represents the power supply state of the hybrid power system at a current moment, and the power supply state is determined by a power supply topology formed by the fuel cells capable of external power supply of the hybrid power system; and
after receiving a high-voltage start command, according to a preset start strategy corresponding to the main state value, starting the corresponding batteries of the hybrid power system, and according to the main state value and the vehicle demand power, performing an energy management on the started batteries of the hybrid power system.

In the third aspect, the embodiment of the present disclosure provides an energy management device for the hybrid power system with multiple fuel cells, adapted to the hybrid power system described in the first aspect, comprising:
a main state value determining module, configured to obtain the current main state value of the hybrid power system, wherein the main state value represents the power supply state of the hybrid power system at a current moment, and the power supply state is determined by the power supply topology formed by the fuel cells capable of external power supply of the hybrid power system; and
an energy management module, configured to, after receiving a high-voltage start command, according to a preset start strategy corresponding to the main state value, start the corresponding batteries of the hybrid power system, and according to the main state value and the vehicle demand power, perform an energy management on the started batteries of the hybrid power system.

According to the present technical solution, multiple low-power fuel cells can be connected in series and parallel to form a complex fuel cell system. Compared to the solution of high-power fuel cells simply paralleled, the present technical solution can reduce costs and improve system efficiency. The fuel cell system designed by combining the characteristics of both series and parallel connections, adopts a multi-series-multi-parallel topology, and two ends of each fuel cell in series branch are connected in parallel with a bypass disconnect switch to connect or disconnect the fuel cell from the fuel cell system. Therefore, by means of the bypass disconnect switch, when any fuel cell fails, the faulty fuel cell can be promptly disconnected from the system and then reconnected once the issue is resolved, which overcomes the shortcomings of low reliability in series connections and high costs in parallel connections, improving the reliability of the fuel cell system with multiple fuel cells coupled. Therefore, in the solution, while ensuring high efficiency and lightweight, the system has high controllability.

### BRIEF DESCRIPTION OF THE DRAWINGS

The drawings described herein are provided for further understanding of the present disclosure and constitute a part of the present disclosure. The illustrative embodiments of the present disclosure and their descriptions are used to explain the disclosure and do not constitute undue limitations on the disclosure. In the drawings:
Fig. 1 is a schematic structural diagram of a hybrid power system of a rail vehicle in the related disclosure.
Fig. 2 is a schematic structural diagram of a hybrid power system of a rail vehicle according to the embodiment of the present disclosure.
Fig. 3 is a flowchart of an energy management method for a hybrid power system with multiple fuel cells according to the embodiment of the present disclosure.
Fig. 4 is a flowchart of a determining process of the main state value HBS_state according to the embodiment of the present disclosure.
Fig. 5 is a flowchart of a detailed process of step 220 shown in Fig. 4.
Fig. 6 is a flowchart of a detailed process of controlling the power output of the fuel cell system according to a target output power in the embodiment of the present disclosure.
Fig. 7 is a schematic diagram of an energy management device for the hybrid power system with multiple fuel cells according to the embodiment of the present disclosure.

### DETAILED DESCRIPTION

The following is a detailed description of the exemplary embodiments of the present disclosure, provided in conjunction with the accompanying drawings. Obviously, the described embodiments are merely a portion of the embodiments of the present disclosure and do not constitute an exhaustive enumeration of all embodiments. It should be noted that, in the absence of any conflict, the embodiments and the features within those embodiments described in this disclosure can be combined with each other.

In the embodiments of the present disclosure, multiple low-power fuel cells are connected in series, and connected in parallel to form a complex fuel cell system. Fig. 2 is a schematic structural diagram of a hybrid power system of a rail vehicle according to the embodiment of the present disclosure. As shown in Fig. 2, the hybrid power system with multiple fuel cells comprises a power battery and a fuel cell system. The fuel cell system comprises at least two branches paralleled, each branch having at least two fuel cells connected in series. Each branch is connected to a DC bus via a DC/DC converter. Particularly, all the fuel cells on the same branch are connected in series and then connected to the DC bus via a DC/DC converter, while the power battery is also connected to the same DC bus. In a hybrid power system, the power battery is employed to maintain the voltage of the DC bus, the large capacity characteristic of the power battery can prevent a sudden change in the DC bus voltage, and serve a function of peak-load shifting. The hybrid power system serves as the ultimate energy source, and the output power of the fuel cell system can be adjusted according to the state of charge (SOC) of the power battery and the vehicle demand power, which serves as a main control variable for the energy management.

In one embodiment, the fuel cell system comprises two branches paralleled, namely a first branch and a second branch, and each branch has four fuel cells connected in series, as shown in Fig. 2, the fuel cell system has a 4-series-2-parallel topology. It is understood that the fuel cell system may also have three, four, or even more branches paralleled, and the number of fuel cells connected in series in each branch may be equal or unequal.

In the same branch, the series current remains constant, and the voltage is the sum of the voltages of all cells, four fuel cells connected in series are connected to an input terminal of the DC/DC converter, which controls the boost ratio of the DC/DC converter at a low value, and enhances the electric-to-electric conversion efficiency. The main function of a DC/DC converter is voltage boosting and voltage stabilizing. The voltage boosting is required due to the output power of the fuel cell not meeting the vehicle's usage requirements, connecting too many fuel cell units in series may result in imbalances, and lead to performance degradation, therefore the fuel cell manufacturers set a relatively low output voltage, then voltage boosting is necessary. The voltage stabilization is required due to the soft output characteristics of the fuel cell, where an increase in current may cause a rapid voltage drop, therefore, the fuel cell needs to be used in conjunction with the DC/DC converter.

The branches paralleled ensure the vehicle demand power while improving the reliability of its power supply. The bypass disconnect switch is connected in parallel at two ends of each fuel cell to connect the fuel cell into the fuel cell system for power supply or disconnect the fuel cell from the fuel cell system. Therefore, employing the bypass disconnect switch, when any fuel cell fails, the faulty fuel cell can be promptly disconnected from the system and then reconnected once the issue is resolved, which overcomes the shortcomings of low reliability in series connections and high costs in parallel connections, improving the reliability of the fuel cell system with multiple fuel cells coupled. A hydrogen storage system provides hydrogen for the entire fuel cell system. An energy control unit controls various units (power battery, fuel cell, hydrogen storage system, and DC/DC converter) in the hybrid power system.

The topological structure of the hybrid power system can solve the problems of the coupled power supply for the fuel cell systems with multiple fuel cells in the rail vehicle. The multiple low-power fuel cells can be connected in series and parallel to form a complex fuel cell system. However, in a parallel configuration, each fuel cell requires equipment with one separate DC/DC converter, resulting in a system that has a large volume and weight, and the high voltage conversion ratio leads to a reduction in electrical-to-electrical conversion efficiency and a higher overall cost of the system. In a series configuration, a single faulty fuel cell would cause the entire series branch connected to be inoperable, the reliability and controllability of the system is poor. Therefore, this embodiment designs the fuel cell system by combining the characteristics of both series configuration and parallel configuration, a multi-series-multi-parallel topology, and in the series branch two ends of each fuel cell are connected in parallel with a bypass disconnect switch while ensuring high efficiency and lightweight, the system has high controllability.

According to the topology shown in Fig. 2, the power supply state of the hybrid power system containing multiple fuel cells has six states as follows:
(1) normal power supply;
(2) limp-home hybrid power supply;
(3) limp-home pure battery power supply;
(4) limp-home pure fuel cell power supply;
(5) limp-home pure fuel cell fault power supply; and,
(6) hybrid power system fault.

The mentioned power supply states are determined based on the power supply topology formed by the fuel cells capable of external power supply of the hybrid power system. The fault states of various units (power battery, fuel cell, hydrogen storage system, and DC/DC converter) in the hybrid power system are uniformly classified into three levels. Level 0 indicates no fault; level 1 indicates certain parameters deviate from normal values and require attention, but do not affect operation, and level 2 indicates the occurrence of a fault. The fault classification at level 0 or level 1 is considered a normal state, and the fault classification at level 2 is considered a faulty state.

For the fuel cell system containing multiple fuel cells, when one or several fuel cells in the system fail to generate electricity due to malfunctions, the normal fuel cells can continue to generate electricity by disconnecting the faulty ones. However, because there are various forms of fault states in the fuel cell system, and large differences exist in the power supply states of the hybrid power system, it is necessary to solve the energy management problem under different fault states of the hybrid power system with multiple fuel cells to achieve the reliability of the system. The present disclosure identifies the power supply state of the system based on the main state value of the hybrid power system, providing an entry for different energy control strategies, and thereby enabling the power supply application of low-power fuel cells on the rail vehicle.

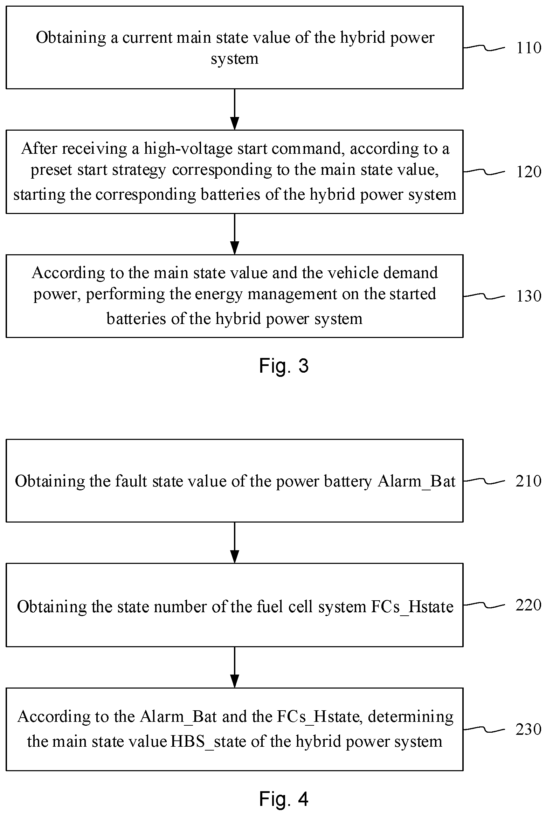

The embodiment provides an energy management method based on the mentioned hybrid power system. The various steps in this method are executed by an Electronic Control Unit (ECU) on a rail vehicle. Please refer to Fig. 3, which is a flowchart of the energy management method for a hybrid power system with multiple fuel cells according to an embodiment of the present disclosure; the method comprises:
Step 110: Obtaining a current main state value of the hybrid power system;
Step 120: After receiving a high-voltage start command, according to a preset start strategy corresponding to the main state value, starting the corresponding batteries of the hybrid power system; and
Step 130: According to the main state value and a vehicle demand power, performing energy management on the started batteries of the hybrid power system.

The following is a detailed introduction to each step from Step 110 to Step 130:
In step 110, after starting the vehicle, after being powered on, the controllers connected to each unit (power battery, fuel cell, hydrogen storage system, and DC/DC converter) of the hybrid power system complete a self-check automatically and send the fault state of each unit to the ECU for subsequent determination. The fault state is uniformly classified into three levels. Level 0 indicates no fault, level 1 indicates certain parameters deviate from normal values and require attention, but do not affect operation, and level 2 indicates the occurrence of a fault. In the fault classification at level 0 or level 1, the fault state is considered as a normal state; and in the fault classification at level 2, the fault state is considered as a faulty state.

After receiving the fault states of each unit sent by the respective controllers, according to the faulty state of each unit, the ECU determines the main state value of the hybrid power system at the current moment.

Particularly, please refer to Fig.4, which is a flowchart of a process for determining the main state value HBS_state according to the embodiment of the present disclosure, the detailed process comprises:
Step 210: obtaining the fault state value of the power battery Alarm_Bat.

The fault states of the power battery are classified into three levels, level 0 indicates no fault, level 1 indicates certain parameters that deviate from normal values and require attention, but do not affect operation, and level 2 indicates the occurrence of a fault. The fault classification at level 0 or level 1 is considered a normal state, and the fault classification at level 2 is considered a fault state. Therefore, if the fault classification is at level 0 or level 1, the fault state value of the power battery Alarm_Bat is set to 1, indicating that the power battery is normal; if the fault classification is at level 2, the Alarm_Bat is set to 0, indicating that the power battery is faulty.

Step 220: obtaining the state number of the fuel cell system FCs_Hstate. The FCs_Hstate represents the total number of the fuel cells capable of external power supply.

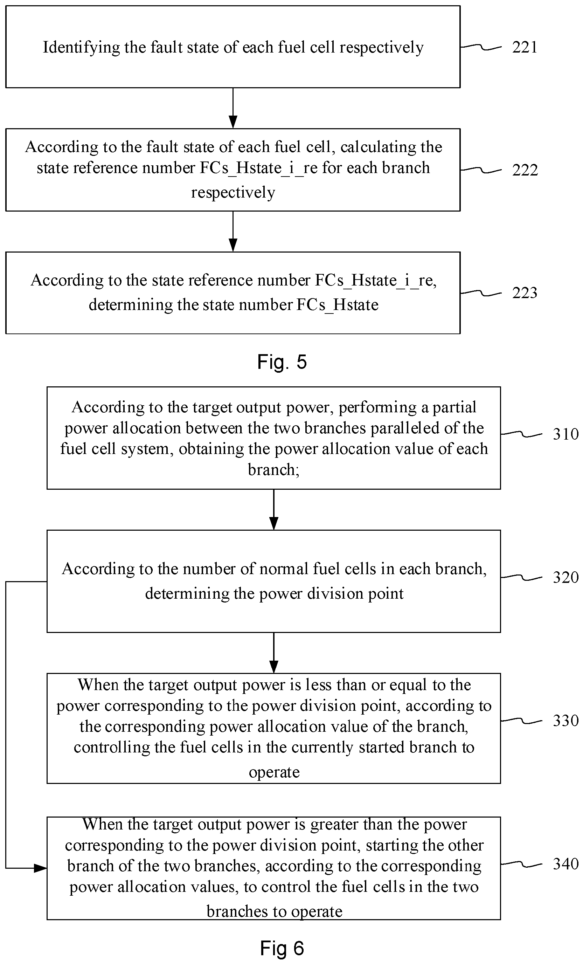

Particularly, please referto Fig. 5, which is a flowchart of a detailed process of step 220 illustrates the detailed process of Step 220. The step 220 comprises:
Step 221, identifying the fault state of each fuel cell respectively.

The fault states of the fuel cell are classified into three levels, level 0 indicates no fault, level 1 indicates certain parameters that deviate from normal values and require attention, but do not affect operation, and level 2 indicates the occurrence of a fault. The fault classification at level 0 or level 1 is considered a normal state, and the fault classification at level 2 is considered a fault state. Therefore, if the fault classification of a fuel cell is level 0 or level 1, the fault state of the fuel cell is determined to be normal; if the fault classification of a fuel cell is level 2, the fault state of the fuel cell is determined to be faulty.

Step 222, according to the fault state of each fuel cell, calculating the state reference number FCs_Hstate_i_re for each branch respectively.

Where the FCs_Hstate_i_re represents in the i-th branch the number of fuel cells in normal. If there are 4 fuel cells connected in series in the second branch, the fault state of 3 fuel cells is normal, and the fault state of 1 fuel cell is faulty, then determine the state reference number FCs_Hstate_2_re of the second branch is 3.

Step 223, according to the state reference number FCs_Hstate_i_re, determining the state number FCs_Hstate.

After obtaining the state reference number FCs_Hstate_i_re for each branch, determining whether the fault state of the hydrogen storage system connected to the fuel cell system is faulty or not. The fault states of the hydrogen storage system are classified into three levels, level 0 indicates no fault, level 1 indicates certain parameters that deviate from normal values and require attention, but do not affect the operation, and level 2 indicates the occurrence of a fault. The fault classification at level 0 or level 1, the fault state is considered normal; and the fault classification at level 2, the fault state is considered faulty. If the fault classification of the hydrogen storage system is level 0 or level 1, the fault state of the hydrogen storage system is determined not faulty; if the fault classification of the hydrogen storage system is level 2, the fault state of the hydrogen storage system is determined faulty.

If the hydrogen storage system is not faulty, further determining whether the DC/DC converter connected to each branch is faulty or not, assigning the state reference value FCs_Hstate_i_re of the non-faulty DC/DC converter branch to the state target number FCs_Hstate_i of that branch, and setting the state target number FCs_Hstate_i of the faulty DC/DC converter branch to zero, where the FCs_Hstate_i represents the total number of fuel cells in the i-th branch that can supply power externally. According to the sum of the state target number FCs_Hstate_i of each branch, obtaining the state number FCs_Hstate.

Because the entire fuel cell system employs one hydrogen storage system for hydrogen supply, if the hydrogen storage system is faulty, the entire fuel cell system will be unable to operate normally. That is, the entire fuel cell system cannot supply power externally. At this time, both the state target number FCs_Hstate_i of each branch and the state number FCs_Hstate of the fuel cell system are set to zero directly.

Take Fig. 2 as an example, in a detailed embodiment of steps 221 to 222 as described above, identify the fault state of the fuel cells respectively, if the fault classification of a fuel cell is not level 2, the fuel cell is considered to be normal, and the fault state value FCX_X_OK is set to 1, otherwise, the fault state value is set to 0. In the FCX_X_OK, the first X represents the branch label, indicating two branches paralleled and with values ranging from 1 to 2, the second X represents the fuel cell number, indicating four fuel cell series and with values ranging from 1 to 4. Then, sum up the fault state value FCX_X_OK of the fuel cells of each branch, and set the fault state value FCX_X_OK of the fuel cells of each branch to FCs_Hstate_1_re and FCs_Hstate_2_re respectively. Determining whether the hydrogen storage system is faulty or not. If the hydrogen storage system is faulty, setting the state target number FCs_Hstate_1 and FCs_Hstate_2, which represent the number of the fuel cells capable of external power supply in each branch, as well as the state number FCs_Hstate of the fuel cell system, all to zero. If the hydrogen storage system is not faulty, further determining the fault state of the DC/DC converter connected to each branch. If the DC/DC converter connected to the branch is faulty (namely, at a Level 2 fault), set the state target number FCs_Hstate_i of the branch to zero. If the DC/DC converter connected to two branches are not faulty, set the values of FCs_Hstate_1_re and FCs_Hstate_2_re to FCs_Hstate_1 and FCs_Hstate_2 respectively, and then sum up the FCs_Hstate_1 and FCs_Hstate_2 to obtain the state number FCs_Hstate of the fuel cell system.

After obtaining the fault state value of the power battery Alarm_Bat, and the state number FCs_Hstate of the fuel cell, executing step 230, according to the Alarm_Bat and the FCs_Hstate, to determine the main state value HBS_state of the hybrid power system.

The main state value HBS_state represents the current real-time power supply state of the hybrid power system. As described above, the hybrid power system in the embodiment comprises six power supply states in total: (1) normal power supply; (2) limp-home hybrid power supply; (3) limp-home pure battery power supply; (4) limp-home pure fuel cell power supply; (5) limp-home pure fuel cell fault power supply; (6) hybrid power system fault.

In step 230, a detailed process for determining the main state value HBS_state comprises:
(1) In the normal power supply state, the HBS_state = 0. Both the power battery and the fuel cell system in the hybrid power system are normal, and capable of according to the normal energy allocation strategy to supply power.

When the Alarm_Bat indicates the power battery is normal, and the FCs_Hstate is M, setting the main state value HBS_state to a target value, where the M represents the total number of fuel cells in the fuel cell system, the target value corresponds to the normal power supply state of the hybrid power system. For ease of implementation, the target value can be set to 0.

(2) In the limp-home hybrid power supply state, the HBS_statel = 1. In this state, the power battery is normal, and some fuel cells of the fuel cell system are faulty. Currently, the hybrid power system supplies power in a hybrid power supply mode. Because the fuel cell system comprises 8 fuel cells, the system topology with HBS_state equal to 1 comprises various situations, such as single branch faults and double branch faults, the branch faults number also has various combinations, therefore the energy allocation strategy of the fuel cell system will differ.

When the Alarm_Bat indicates the power battery is normal, and the FCs_Hstate ∈ [1, M-1], set the main state value HBS_state to a first value, the first value corresponds to the hybrid power supply state of the hybrid power system. For ease of implementation, the first value can be set to 1.

(3) In the limp-home pure battery power supply state, the HBS_state = 2. In this state, the power battery is normal, the entire fuel cell system is unable to supply power, and the power battery can be employed to supply power for the hybrid power system alone.

When the Alarm_Bat indicates the power battery is normal, and the FCs_Hstate is 0, set the main state value HBS_state to a second value, the second value corresponds to the pure battery power supply state of the hybrid power system. For ease of implementation, the second value can be set to 2.

(4) In the limp-home pure fuel cell power supply state, the HBS_state = 3. In this state, the power battery is faulty, and all fuel cells in the entire fuel cell system are normal. Because there is no stabilized voltage source on the DC bus, the DC/DC converter connected to the fuel cells can be set to a voltage source mode for external output.

When the Alarm_Bat indicates the power battery is faulty, and the FCs_Hstate is M, set the main state value HBS_state to a third value, the third value corresponds to the pure fuel cell power supply state of the hybrid power system. For ease of implementation, the third value can be set to 2.

(5) In the limp-home pure fuel cell fault power supply state, the HBS_state = 4. In this state, the power battery is faulty, and some fuel cells of the fuel cell system are faulty, the hybrid power system employs the fuel cells in the normal state to supply power for external. Meanwhile, to meet the minimum power supply requirements (auxiliary load power supply) of the vehicle, only when the FCs_Hstate is not less than a preset basic number, the HBS_state is set to 4. Because the fuel cell system comprises 8 fuel cells, the system topology with HBS_state equal to 4 comprises various situations, such as single-branch fault and double-branch faults, and the branch faults number also has various combinations, therefore the energy allocation strategy of the fuel cell system will change.

When the Alarm_Bat indicates the power battery is faulty, and the FCs_Hstate ∈ [M', M-1], set the main state value HBS_state to a fourth value. Wherein the M' represents the basic number of fuel cells to meet the vehicle's minimum power supply requirements, the fourth value corresponds to the pure fuel cell fault power supply state of the hybrid power system. For ease of implementation, the fourth value can be set to 4, and the M' can be set to 2 which represents the basic number of fuel cells to meet the vehicle's minimum power supply requirements.

(6) In the hybrid power system fault state, the HBS_state = 5. In this state, both the power battery and the entire fuel cell system are faulty (or the fuel cells do not meet the minimum power supply requirements of the vehicle), and the hybrid power system is incapable of external output and needs to shut down the power for fault investigation.

When the Alarm_Bat indicates the power battery is faulty, and the FCs_Hstate ∈ [0, M'), set the main state value HBS_state to a fifth value, the fifth value corresponds to the hybrid power system fault state. For ease of implementation, the fifth value can be set to 5.

It should be noted that after setting the main state value HBS_state as described above, the fuel cell system waits for the high-voltage start command. Before receiving the high-voltage start command, continuously judge the real-time main state value of the hybrid power system, and ensure that before the high-voltage start, the main state value always remains the current and latest state.

After receiving the high-voltage start command, the ECU executes step 120, specifically, according to the main state value, starting the corresponding batteries in the hybrid power system.

In step 120, according to the differences of the main state value, the startup strategy for the hybrid power system is classified into the following situations:
1) When the HBS_state equals the target value, sequentially starting the power battery, one of the branches in the fuel cell system, and the DC/DC converter, and set the DC/DC converter in current source mode.
2) When HBS_state equals the first value, sequentially starting the power battery, one of the branches in the fuel cell system, and the DC/DC converter. The faulty fuel cell of the fuel cell system is disconnected from the fuel cell system via the bypass disconnect switch, and the DC/DC converter is set in the current source mode.
   In the above-described situations 1) and 2), the power supply state of the hybrid power system is the normal power supply state or the hybrid power supply state. At present, to save energy, only start one of the branches in the fuel cell system. Particularly, starting the branch with fewer normal fuel cells of the two branches paralleled in the fuel cell system. If two branches have the same number of normal fuel cells, starting the first branch.
3) When HBS_state equals the second value, starting the power battery;
4) When HBS_state equals the third value, sequentially starting the fuel cell system and the DC/DC converter, and set the DC/DC converter in voltage source mode;
5) When HBS_state equals the fourth value, sequentially starting the fuel cell system and the DC/DC converter. And disconnected the faulty fuel cell of the fuel cell system from the fuel cell system via the bypass disconnect switch, and set the DC/DC converter in voltage source mode.

In the above-described situations 4) and 5), the power battery of the hybrid system is faulty, only the fuel cell system supplies power, at this moment, all normal fuel cells start as much as possible.

When HBS_state equals the fifth value, the power supply state of the hybrid power system is the system fault state, the hybrid power system is incapable of external output, and all batteries do not start.

After receiving the power demand command sent by the Vehicle Control Unit (VCU), the ECU executes step 130, specifically, according to the main state value and the vehicle demand power, performing the energy management on the started batteries of the hybrid power system.

In step 130, according to the different main state values, the energy management strategy for the hybrid power system is classified into the following situations:
1) When the HBS_state equals the target value or the first value, according to the vehicle demand power, performing a global power allocation to the fuel cell system, to obtain the target output power of the fuel cell system; according to the target output power, controlling the power output of the fuel cell system.

The step of according to the vehicle demand power, performing the global power allocation for the fuel cell system, comprises:
i) When the state of charge (SOC) of the power battery is greater than SOCmax (the upper limit of the SOC control range):
   If the vehicle demand power is greater than the sum of the maximum available power of the power battery and the maximum available power of the fuel cell system, set the maximum available power of the fuel cell system as the target output power (to make the fuel cell output at the maximum power, the power battery discharges at the maximum capacity automatically), at the same time, generate a system power insufficiency warning. The maximum available power of the power battery is determined by the output voltage of the power battery and the maximum allowable discharge current of the power battery. The maximum available power of the fuel cell system is determined by the number of normal fuel cells of the fuel cell system and the maximum power of each fuel cell.

Otherwise (if the vehicle demand power is not greater than the sum of the maximum available powerof the power battery and the maximum available power of the fuel cell system), setting the minimum available power of the fuel cell system as the target output power (to make the fuel cell output at the minimum power, the other power demand is met by the power battery).

ii) When SOCmin (the lower limit of the SOC control range) < SOC ≤ SOCmax:
If the vehicle demand power is greater than the sum of the maximum available power of the power battery and the maximum available power of the fuel cell system, set the maximum available power of the fuel cell system as the target output power, and generate a system power insufficiency warning.
If the vehicle demands power between the maximum available power of the fuel cell system and the maximum available power of the hybrid power system, according to the magnitude relationship between the SOC of the power battery and an intermediate reference value of SOC control range SOCdown, to determine the target output power, namely SOCmin < SOCdown < SOCmax. The maximum available power of the hybrid power system is the sum of the maximum available power of the power battery and the maximum available power of the fuel cell.

To make the SOC of the power battery not drop to SOCmin, setting an intermediate reference value and SOCdown. When the vehicle demands power in the range described above, further determing the range of SOC, wherein comprises the following two sub-situations:

SOCmin < SOC ≤ SOCdown: setting the maximum available power of the fuel cell system as the target output power, currently, the fuel cell output at the maximum power, while ensuring meets the vehicle demand power, charging the power battery as quickly as possible, to make the SOC of the power battery not dropping to SOCmin.

SOCdown < SOC ≤ SOCmax: setting the vehicle demand power as the target output power. Under the premise that the vehicle demands power between the maximum available power of the fuel cell system and the maximum available power of the hybrid power system, the fuel cell meets the power requirements of the vehicle while the power battery with no output.

If the vehicle demand power is not in the mentioned two ranges above, the minimum available power of the fuel cell system is set as the target output power.

iii) When SOC≤SOCmin:
At this moment, no matter how much of the vehicle demands power, the fuel cell system outputs at the maximum power, meaning that setting the maximum available power of the fuel cell system as the target output power, meanwhile generating a power reduction warning, and sending the power reduction warning to the vehicle controller.

After obtaining the target output power of the fuel cell system, according to the target output power, controlling the power output of the fuel cell system. Please refer to Fig. 6, which is a flowchart of a detailed process of controlling the power output of the fuel cell system according to a target output power in the embodiment of the present disclosure. The detailed process comprises:
Step 310, according to the target output power, performing a partial power allocation between the two branches paralleled in the fuel cell system, obtaining the power allocation value of each branch.

In one embodiment, dividing the target output power by the total number of fuel cells in a normal state among the two branches, to obtain the power output value for a single normal fuel cell; and multiplying the power output value for a single normal fuel cell by the number of fuel cells in a normal state in each branch, to obtain the power allocation value for each branch.

Step 320, according to the number of normal fuel cells in each branch, determining the power division point, when the target output power is less than or equal to the power corresponding to the power division point, jumping to executing step 330, and when the target output power is greater than the power corresponding to the power division point, jumping to executing the step 340.

In step 320, according to the number of normal fuel cells in each branch, invoking the offline calculated result of the power division point. The power division point is obtained, according to the total number ofnormal fuel cells in each branch to determine the total output power-battery operating efficiency curve (hereinafter referred to as the power-efficiency curve) of each branch, and taking the intersection point of the power-efficiency curves of the two branches. The power division point is determined by taking the intersection of the power-efficiency curves of the two branches. Because the number of normal fuel cells in each branch can vary from 1 to 4, the power-efficiency curve of each branch has four different situations, resulting in multiple combinations. For example, when the number of normal fuel cells in the first branch is 2, the number of normal fuel cells in the second branch could be 1, 2, 3, or 4, namely having four different situations, in each situation the power division point is different. The power division point is obtained according to the factory parameters of the fuel cells calculated offline. And preset the power division point results of the two branches under different numbers of normal fuel cells in the control program of the ECU, to invoke directly.

Step 330, according to the corresponding power allocation value of the branch, controlling the fuel cells in the currently started branch to operate.

Step 340, starting the other branch of the two branches, and according to the corresponding power allocation values, controlling the fuel cells in the two branches to operate.

It should be noted that, because the fuel cell system comprises multiple fuel cells, one or more of the fuel cell systems in faulty, and the power supply state of the hybrid power system changes accordingly, the original optimization strategy is no longer applicable. Therefore, the present method could ensure the fuel cell system can maintain optimal energy allocation strategy under any situation, and improve the hybrid power system efficiency. The present disclosure takes the number of normal fuel cells in each of the two branches paralleled as the input condition, and invokes the real-time offline calculation results, to obtain the power division point. When the fuel cell system power requirement (i.e., the target output power) is less than or equal to the power corresponding to the power division point, only starting one branch of the two branches paralleled. When the fuel cell system power requirement is greater than the power corresponding to the power division point, start two branches. That is ensure the fuel cell system in any fault situation operates always according to the high-efficiency range of the power-efficiency curves of both branches.

2) When the HBS_state equals the second value, the ECU sends a limp-home warning and the maximum allowable discharge current of the power battery to the Vehicle Control Unit (VCU). After receiving the limp-home warning, according to the maximum allowable discharge current, the VCU updates the vehicle demand power.

Because the power battery has been started in Step 120, the power battery is consumed continuously, and the SOC (State of Charge) decreases continuously. When the SOC decreases to lower than the warning threshold SOC_low_alarm1, the VCU (Vehicle Control Unit) needs to disconnect the vehicle traction and only send auxiliary load demand power. When the SOC continues to decrease to lower than the alarm threshold SOC_low_alarm2, the ECU will shut down the power battery via the energy control unit, the power battery powered off, and the hybrid power system stop supplying power to external. SOC_low_alarm1 is greater than SOC_low3_alarm2.

3) When the HBS_state equals the third value or the fourth value, dividing the target output power by the total number of fuel cells in a normal state in two branches, to obtain the power output value of a single normal fuel cell. Multiplying the power output value of a single normal fuel cell by the number of fuel cells in normal condition in each branch, to obtain the power allocation value for each branch. According to the power allocation value of each branch, setting the current value of each branch (the ratio of power and voltage), to control the fuel cells in each branch to output power according to the corresponding power allocation value. At this moment, the DC/DC converter outputs in voltage source mode.

In the present embodiment through the above implementation, after the rail vehicle starts, the energy management for the hybrid power system could be achieved; after receiving the shutdown command, the ECU shuts down all the started batteries in the hybrid power system.

Particularly, because in different main states, the starting units of the hybrid power system are not the same exactly, after receiving the shutdown command, the ECU judges each unit state of the hybrid power system respectively. If the unit is running, the ECU sends a shutdown command to the controller connected to the unit, after receiving the shutdown command, the controller shuts down the unit. After shutting down the fuel cell system, the controllers of each unit enter the power-on self-check state, and the ECU waits for the high-voltage start command or the system power-off.

The present disclosure can achieve the power supply application of 30kW low-power fuel cells for automobiles on rail vehicles, to replace the high-power fuel cell power supply, while reducing the operating costs and improving the power supply reliability of hybrid power systems. The inventor employs the present solution to the third-generation fuel cell system for new energy vehicles at CRRC Tangshan Company, successfully achieving the energy allocation management of the hybrid power supply with eight low-power fuel cells.

In summary, the present disclosure provides a hybrid power system with multiple fuel cells and an energy management method, which has the following technical effects:
(1) Significantly reduce the operating cost of fuel cell systems for rail vehicles. The power requirements of rail vehicles are much higher compared to automobiles, the conventional rail vehicle requires higher power and generally employs the customized high-power fuel cell. Because of the high demands on pressure, flow rate, and other factors for air, hydrogen, and so on, the cost of customized increases exponentially. In contrast, the operating cost of low-power fuel cells is significantly lower. Employing the energy management method proposed in the present disclosure, it is possible to replace the customized high-power fuel cell solutions, drastically reducing user costs.
(2) Effectively improve the power supply reliability of the hybrid power system. The energy management method proposed in the present disclosure employs paralleled branches and series branches with bypass disconnect switches, to form a complex fuel cell system combining series and parallel connections. While ensuring high efficiency and lightweight, the system has high controllability. Compared to the situation where a high-power fuel cell fails and cannot supply power, when one or more fuel cells fault in the present disclosure, the faulty fuel cells can be disconnected via the bypass disconnect switches. The other fuel cells in the normal state can continue to supply power, and would not cause the hybrid power system to shut down, the power supply reliability of the hybrid power system improving significantly.
(3) Optimal system efficiency can be achieved under any fault state of the fuel cell system. The energy management method proposed in the present disclosure takes the number of fuel cells in the normal state in each of the two branches paralleled as input conditions, invoking the real-time offline calculation results to obtain the intersection point of the power-efficiency curves of each parallel branch under any fault state of the fuel cell system, which is the power division point. This allows the fuel cell system with multiple fuel cells to operate continuously in the high-efficiency range before and after the intersection of the two power-efficiency curves, improving the economy of the power supply system with multiple fuel cells.

Based on the same inventive concept, an embodiment of the present disclosure provides an energy management device for a hybrid power system with multiple fuel cells. The hybrid power system comprises a power battery, connected to a DC bus; and a fuel cell system, comprising at least two paralleled branches, each branch having at least two fuel cells connected in series, each branch connected to the DC bus via a DC/DC converter, two ends of each fuel cell connected in parallel with a bypass disconnect switch to connect the fuel cell into the fuel cell system for power supply or disconnect the fuel cell from the fuel cell system. For the specific structure of the hybrid power system, please refer to Fig. 2 and the description.

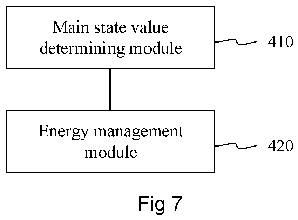

Please refer to Fig. 7, which is a schematic diagram of an energy management device for a hybrid power system with multiple fuel cells according to an embodiment of the present disclosure. The device comprises a main state value determining module 410 and an energy management module 420. The main state value determining module 410 is configured to obtain the current main state value of the hybrid power system, wherein the main state value represents the power supply state of the hybrid power system at a current moment, and the power supply state is determined by the power supply topology formed by the fuel cells capable of external power supply of the hybrid power system. The energy management module 420 is configured to, after receiving a high-voltage start command, according to a preset start strategy corresponding to the main state value, start the corresponding batteries of the hybrid power system and according to the main state value and the vehicle demand power, perform the energy management on the started batteries of the hybrid power system.

It can be understood that the implementation principles and technical effects of the energy management device for the hybrid power system with multiple fuel cells in this embodiment have already been described in the above-described method embodiments. For brevity, any aspects of the energy management device for the hybrid power system with multiple fuel cells not mentioned herein may refer to the corresponding descriptions in the energy management method of the above-described embodiments, and will not be repeated here.

Those skilled in the art should understand that embodiments of the present disclosure may be provided as methods, systems, or computer program products. Therefore, the present disclosure can take the form of a completely hardware embodiment, a completely software embodiment, or an embodiment combining software and hardware aspects. Furthermore, the present disclosure can take the form of a computer program product implemented on one or more computer-readable storage medium (including but not limited to a disk storage, a CD-ROM, an optical storage, etc.) containing computer-usable program code.

The present disclosure is described with reference to flowcharts and/or block diagrams of methods, devices (systems), and computer program products according to embodiments of the present disclosure. It should be understood that, each flow and/or block in the flowcharts and/or block diagrams, and combinations of flows and/or blocks in the flowcharts and/or block diagrams. These computer program instructions can be provided to processors of general-purpose computers, special-purpose computers, embedded processors, or other programmable data processing devices to create a machine, when executed by the processors of the computers or other programmable data processing devices, the instructions generate a device that implements the functions specified in one or more flows in the flowcharts and/or one or more blocks in the block diagrams.

The computer program instructions may also be stored in a computer-readable memory capable of directing a computer or other programmable data processing apparatus to operate in a particular manner, such that the instructions stored in the computer-readable memory produce an article of manufacture including instruction means which implement the functions specified in one or more flows in the flowcharts and/or one or more blocks in the block diagrams.

The computer program instructions can also be loaded onto a computer or other programmable data processing apparatus to cause a series of operational steps to be performed on the computer or other programmable apparatus to produce a computer-implemented process. Thus, the instructions executed on the computer or other programmable apparatus provide steps for implementing the functions specified in one or more flows in the flowcharts and/or one or more blocks in the block diagrams.

Although preferred embodiments of this application have been described, those skilled in the art can make additional variations and modifications to these embodiments once they become aware of the basic inventive concept. Therefore, the appended claims are intended to be interpreted as including the preferred embodiments as well as all variations and modifications falling within the scope of this application.

Obviously, those skilled in the art can make various modifications and variations to this application without departing from the spirit and scope of this application. Thus, this application is also intended to include these modifications and variations if they fall within the scope of the claims of this application and their equivalent technologies.

## Claims

1. A hybrid power system with multiple fuel cells, comprising:
a power battery, connected to a DC bus; and
a fuel cell system, comprising at least two paralleled branches, each branch having at least two fuel cells connected in series, each branch is connected to the DC bus via a DC/DC converter, and two ends of each fuel cell connected in parallel with a bypass disconnect switch to connect the fuel cell into the fuel cell system for power supply or disconnect the fuel cell from the fuel cell system.

2. The system according to claim 1, wherein the fuel cell system comprises a first branch and a second branch connected in parallel, and each branch has four fuel cells connected in series.

3. An energy management method for a hybrid power system with multiple fuel cells, adapted for the hybrid power system according to claims 1 or 2, the method comprising:
obtaining a current main state value of the hybrid power system, wherein the main state value represents the power supply state of the hybrid power system at a current moment, and the power supply state is determined by a power supply topology formed by the fuel cells capable of external power supply of the hybrid power system; and
after receiving a high-voltage start command, according to a preset start strategy corresponding to the main state value, starting the corresponding batteries of the hybrid power system, and according to the main state value and the vehicle demand power, performing the energy management on the started batteries of the hybrid power system.

4. The method according to claim 3, wherein obtaining a current main state value of the hybrid power system, comprises:
obtaining the fault state value of the power battery Alarm_Bat;
obtaining the state number of the fuel cell system FCs_Hstate, wherein the FCs_Hstate represents the total number of the fuel cells capable of external power supply; and
according to the Alarm_Bat and the FCs_Hstate, to determine the main state value HBS_state of the hybrid power system.

5. The method according to claim 4, wherein obtaining the state number of the fuel cell system FCs_Hstate comprises:
identifying the fault state of each fuel cell respectively;
according to the fault state of each fuel cell, calculating the state reference number FCs_Hstate_i_re of each branch respectively; and
according to the state reference number FCs_Hstate_i_re, determining the state number FCs_Hstate.

6. The method according to claim 5, wherein according to the state reference number FCs_Hstate_i_re, determining the state number FCs_Hstate comprises:
determining whether the fault state of the hydrogen storage system connected to the fuel cell system is faulty or not;
if the hydrogen storage system is not faulty, further determining whether the DC/DC converter connected to each branch is faulty or not;
assigning the state reference value FCs_Hstate_i_re of the non-faulty DC/DC converter branch to the state target number FCs_Hstate_i of that branch, and setting the state target number FCs_Hstate_i of the faulty DC/DC converter branch to zero, wherein FCs_Hstate_i represents the total number of fuel cells in the i-th branch capable of supply power externally; and
according to the sum of the state target number FCs_Hstate_i of each branch, obtaining the state number FCs_Hstate.

7. The method according to claim 6, wherein after determining whether the fault state of the hydrogen storage system connected to the fuel cell system is faulty or not, the method further comprises:
if the hydrogen storage system is faulty, setting the state value FCs_Hstate of the fuel cell system to zero directly.

8. The method according to claim 6, wherein according to the state reference number FCs_Hstate_i_re, determining the state number FCs_Hstate, comprises:
in case where the Alarm_Bat indicates the power battery is normal, and the FCs_Hstate is M, setting the main state value HBS_state to a target value, wherein the M represents the total number of fuel cells in the fuel cell system, wherein the target value corresponds to the normal power supply state of the hybrid power system;
in case where the Alarm_Bat indicates the power battery is normal, and the FCs_Hstate ∈ [1, M-1], setting the main state value HBS_state to a first value, wherein the first value corresponds to the hybrid power supply state of the hybrid power system;
in case where the Alarm_Bat indicates the power battery is normal, and the FCs_Hstate is 0, setting the main state value HBS_state to a second value, wherein the second value corresponds to the pure battery power supply state of the hybrid power system;
in case where the Alarm_Bat indicates the power battery is faulty, and the FCs_Hstate is M, setting the main state value HBS_state to a third value, wherein the third value corresponds to the pure fuel cell power supply state of the hybrid power system;
in case where the Alarm_Bat indicates the power battery is faulty, and the FCs_Hstate ∈ [M', M-1], setting the main state value HBS_state to a fourth value, wherein the M' represents the basic number of fuel cells to meet minimum power supply requirements of the vehicle, and the fourth value corresponds to the pure fuel cell fault power supply state of the hybrid power system; and
in case where the Alarm_Bat indicates the power battery is faulty, and the FCs_Hstate ∈ [0, M'), setting the main state value HBS_state to a fifth value, wherein the fifth value corresponds to the hybrid power system fault state.

9. The method according to claim 8, wherein according to a preset start strategy corresponding to the main state value, starting the corresponding batteries of the hybrid power system, comprises:
in case where the HBS_state equals the target value, starting the power battery, one of the branches in the fuel cell system, and the DC/DC converter, and setting the DC/DC converter to operate in current source mode;
in case where HBS_state equals the first value, sequentially starting the power battery, one of the branches in the fuel cell system, and the DC/DC converter, disconnecting the faulty fuel cell from the fuel cell system via the bypass disconnect switch and sets the DC/DC converter in current source mode;
in case where HBS_state equals the second value, starting the power battery;
in case where HBS_state equals the third value, sequentially starting the fuel cell system and the DC/DC converter and setting the DC/DC converter in voltage source mode; and
in case where HBS_state equals the fourth value, sequentially starting the fuel cell system and the DC/DC converter, disconnecting the faulty fuel cell from the fuel cell system via the bypass disconnect switch, and setting the DC/DC converter in voltage source mode.

10. The method according to claim 9, wherein the starting one of the branches in the fuel cell system, comprises:
starting the branch with fewer normal fuel cells of the two branches paralleled in the fuel cell system.

11. The method according to claim 9, wherein according to the main state value and the vehicle demand power, performing energy management on the started batteries of the hybrid power system, comprises:
in case where the HBS_state equals the target value or the first value, according to the vehicle demand power, performing a global power allocation to the fuel cell system, to obtain the target output power of the fuel cell system; and
according to the target output power, controlling the power output of the fuel cell system.

12. The method according to claim 11, wherein according to the vehicle demand power, performing a global power allocation to the fuel cell system, to obtain the target output power of the fuel cell system, comprises:
in case where the state of charge (SCC) of the power battery is greater than SOCmax, if the vehicle demand power is greater than the sum of the maximum available power of the power battery and the maximum available power of the fuel cell system, setting the maximum available power of the fuel cell system as the target output power, otherwise, setting the minimum available power of the fuel cell system as the target output power;
wherein, the SOCmax is the upper limit of the SOC control range.

13. The method according to claim 12, wherein according to the vehicle demand power, performing a global power allocation to the fuel cell system, to obtain the target output power of the fuel cell system, comprises:
in case where the state of charge (SOC) ∈ (SOCmin, SOCmax],
if the vehicle demand power is greater than the sum of the maximum available power of the power battery and the maximum available power of the fuel cell system, setting the maximum available power of the fuel cell system as the target output power, and generating a system power insufficiency warning;
if the vehicle demands power between the maximum available power of the fuel cell system and the maximum available power of the hybrid power system, according to the magnitude relationship between the SOC of the power battery and an intermediate reference value of SOC control range SOCdown, determining the target output power; and
if the vehicle demand power does not in the described two ranges above, setting the minimum available power of the fuel cell system as the target output power;
wherein the SOCmin is the lower limit of the SOC control range, the SOCdown is the reference value at the midpoint of the SOC control range, and SOCmin < SOCdown < SOCmax.

14. The method according to claim 13, wherein according to the magnitude relationship between the SOC of the power battery and an intermediate reference value of SOC control range SOCdown, determining the target output power, comprises:
in case where the SOC of the power battery ∈ (SOCmin, SOCmax], setting the maximum available power of the fuel cell system as the target output power; and
in case where the SOC of the power battery ∈ (SOCdown, SOCmax], setting the vehicle demand power as the target output power.

15. The method according to claim 13, wherein according to the vehicle demand power, performing a global power allocation to the fuel cell system, to obtain the target output power of the fuel cell system, comprises:
in case where SOC≤SOCmin, setting the maximum available power of the fuel cell system as the target output power and generating a power reduction prompt.

16. The method according to any one of claims 11 to 15, wherein according to the target output power, controlling the power output of the fuel cell system, comprises:
according to the target output power, performing a partial power allocation between the two branches paralleled of the fuel cell system, to obtain the power allocation value of each branch;
according to the number of normal fuel cells in each branch, determining the power division point obtained by according to the total number of normal fuel cells in each branch to determine the branch total output power-battery operating efficiency curve, and taking the intersection point of the power-efficiency curves of each branch;
in case where the target output power is less than or equal to the power corresponding to the power division point, according to the corresponding power allocation value of the branch, controlling the fuel cells in the currently started branch to operate; and
in case where the target output power is greater than the power corresponding to the power division point, starting the other branch of the two branches, and according to the corresponding power allocation values, controlling the fuel cells in the two branches to operate.

17. The method according to claim 16, wherein according to the target output power, performing a partial power allocation between the two branches paralleled of the fuel cell system, obtaining the power allocation value of each branch, comprises:
dividing the target output power by the total number of fuel cells in a normal state among the two branches, to obtain the power output value for a single normal fuel cell; and
multiplying the power output value for a single normal fuel cell by the number of fuel cells in a normal state in each branch, to obtain the power allocation value for each branch.

18. The method according to claim 9, wherein according to the main state value and the vehicle demand power, performing energy management on the started batteries of the hybrid power system, comprises:
in case where the HBS_state equals the second value, sending a limp-home indication warning and the maximum allowable discharge current of the power battery to the Vehicle Control Unit (VCU), and after receiving the limp-home warning, according to the maximum allowable discharge current, updating the vehicle demand power by the VCU.

19. The method according to claim 18, wherein the method further comprises:
in case where the SOC of the power battery gradually decreases to lower than the warning value SOC_low_alarm2, shutting down the power battery.

20. The method according to claim 9, wherein according to the main state value and the vehicle demand power, performing energy management on the started batteries of the hybrid power system, comprises:
in case where the HBS_state equals the third value or the fourth value, dividing the target output power by the total number of fuel cells in a normal state in two branches, to obtain the power output value of a single normal fuel cell;
multiplying the power output value of a single normal fuel cell by the number of fuel cells in normal condition in each branch, to obtain the power allocation value for each branch; and
according to the power allocation value of each branch, setting the current value of each branch, to control the fuel cells in each branch to output power according to the corresponding power allocation value.

21. The method according to claim 3, wherein the method further comprises:
after receiving the shutdown command, shutting down all the started batteries of the hybrid power system.

22. An energy management device for a hybrid power system with multiple fuel cells, wherein applying to the hybrid power system according to claim 1 or 2, the device comprises:
a main state value determining module, configured to obtain a current main state value of the hybrid power system, wherein the main state value represents the power supply state of the hybrid power system at a current moment, and the power supply state is determined by the power supply topology formed by the fuel cells capable of external power supply of the hybrid power system; and
an energy management module, configured to, after receiving a high-voltage start command, according to a preset start strategy corresponding to the main state value, start the corresponding batteries of the hybrid power system, and according to the main state value and the vehicle demand power, perform an energy management on the started batteries of the hybrid power system.
